Europäisches Patentamt

European Patent Office

Office européen des brevets

(19)

(11) Numéro de publication : **0 624 805 A1**

# (12) DEMANDE DE BREVET EUROPEEN

(21) Numéro de dépôt : **94401000.8**

(22) Date de dépôt : **06.05.94**

(51) Int. Cl.⁵ : **G01S 13/50, F41G 3/14**

(30) Priorité : **14.05.93 FR 9305838**

(43) Date de publication de la demande :
**17.11.94 Bulletin 94/46**

(84) Etats contractants désignés :
**DE IT NL SE**

(71) Demandeur : **THOMSON-CSF**
**173, Boulevard Haussmann**
**F-75008 Paris (FR)**

(72) Inventeur : **Abon, Gérard Alexis**
**THOMSON-CSF,**
**SCPI,**
**B.P. 329**
**F-92402 Courbevoie Cédex (FR)**
Inventeur : **Avignon, Bruno**
**THOMSON-CSF,**
**SCPI,**
**B.P. 329**
**F-92402 Courbevoie Cédex (FR)**
Inventeur : **Canal, Yves**
**THOMSON-CSF,**
**SCPI,**
**B.P. 329**
**F-92402 Courbevoie Cédex (FR)**

(74) Mandataire : **Brykman, Georges**
**Thomson-CSF,**
**SCPI,**
**B.P. 329**
**F-92402 Courbevoie Cédex (FR)**

(54) **Procédé d'amélioration du pointage d'une arme par obus précurseurs et obus correspondant.**

(57)   Dans une conduite de tir de canon, par exemple anti-aérien, on organise un balayage angulaire de la position de pointage du canon autour d'une position de pointage calculée de façon connue par la conduite de tir. Le balayage est organisé en prenant en compte chacune des distances de passage des obus précédemment tirés. Les obus tirés doivent être munis d'une fusée de proximité (2) et de moyens (2, 4, 5, 7, 8) pour renvoyer vers la conduite de tir des signaux donnant directement ou après traitement la distance de passage.

FIG.2

EP 0 624 805 A1

La présente invention se situe dans le domaine des systèmes de conduite de tir d'armes munies d'un canon et tirant des obus vers une cible. Elle concerne également les obus tirés par de telles armes.

On connaît dans les armes individuelles pour combattant ou dans les armes collectives tirant à vue l'existence d'obus ou de balles traçantes. Les projectiles traçants génèrent tout au long de leur trajectoire, ou dans certains cas sur une phase de leur trajectoire des fumées ou flammes permettant au tireur de voir où va le projectile et partant de rectifier le tir de façon à ce que la trajectoire du projectile suivant se rapproche de la cible.

On connaît également des systèmes complexes de conduite de tir pour guider des tirs de canon en particulier les tirs de canon antiaérien.

De tels systèmes complexes de conduite de tir comportent des moyens de recueil d'informations sur les données cinématiques de la cible, des moyens de calcul de la direction de la cible par rapport au canon, des moyens de calcul de la direction de pointage du canon pour que le projectile tiré rencontre la cible. Ces moyens de calcul tiennent compte des paramètres cinématiques de la cible, de données relatives à la munition notamment sa vitesse initiale à la fin de la phase de balistique intérieure, et de sa décélération compte tenu de la pesanteur et de la résistance de l'air. La trajectoire du projectile est néanmoins soumise à des phénomènes aléatoires ou non pris en compte tels que les sautes de vent locales et/ou temporelles, la courbure du canon, des modifications de la trajectoire de la cible.

Lorsque la conduite de tir est automatique, l'emploi d'obus traçant pour corriger le pointage n'est d'aucune utilité, car en général les capteurs de la conduite de tir ne permettent pas de visualiser la trajectoire du projectile.

La présente invention a pour objet d'une part un projectile doté de moyens pour émettre un signal que peuvent capter les capteurs de la conduite de tir et fournissant suffisamment de données pour permettre aux moyens de calcul de la conduite de tir de déterminer la distance de passage de l'obus par rapport à la cible. Elle est d'autre part relative à un procédé pour, à partir de ces informations de distance de passage, rectifier le tir de façon à augmenter la probabilité d'atteinte de la cible.

L'invention est donc relative à un procédé de correction périodique de pointage d'un canon ayant une cadence de tir définissant une période de tir et de pointage, le canon tirant des obus munis d'une fusée de proximité vers une cible, certains obus étant à un instant donné en route vers la cible, et un obus se trouvant périodiquement à proximité de la cible à une distance inférieure à $D_o$, le canon étant sous le contrôle d'un système de conduite de tir comportant des moyens de recueil d'informations sur les données cinématiques de la cible et des moyens de calcul en temps réel d'une direction principale de pointage vers la cible, procédé caractérisé en ce que :

1°) on intègre périodiquement dans les informations traitées par les moyens de calcul une information de distance de passage de l'obus se trouvant à une distance de la cible inférieure à $D_o$ ;

2°) on utilise les informations successives de distance ainsi obtenues pour organiser un balayage de la direction de pointage du canon à l'intérieur d'un secteur angulaire où se trouve la cible.

Pour ce faire dans un mode de réalisation :

a°) après réception de la première distance de passage on dépointe le canon par rapport à la direction principale dans une première direction d'un angle de valeur calculée en fonction des données cinématiques de la cible ;

b°) après réception de la deuxième distance de passage, on dépointe le canon dans la même direction d'un angle de valeur calculée en fonction des données cinématiques de la cible et de la valeur de l'accroissement algébrique de distance entre la première et la seconde information de distance de passage et dans une second direction d'un angle de valeur calculée en fonction des données cinématiques de la cible ;

c°) après réception de la troisième distance de passage on dépointe le canon dans la première et dans la seconde direction d'un angle de dépointage calculé en fonction de la valeur de l'accroissement algébrique de distance entre la première et la seconde information de distance de passage et de l'accroissement algébrique de distance entre la troisième et la seconde information de distance ;

d°) on recommence les étapes a à c pour d'autres directions de pointage de façon à organiser un balayage de plus en plus fin autour de la cible.

Le procédé est dit de correction périodique de pointage, car il s'agit d'un procédé applicable à un canon muni d'une conduite de tir pilotant la direction de pointage du canon et déterminant une direction principale de pointage. Les corrections de pointage sont introduites périodiquement à la cadence de tir des obus, le tir de l'obus de rang n prenant en compte les informations de distance de passage déjà reçues par exemple jusqu'à l'obus n-4, si n-4 obus sont déjà passés à proximité de la cible et que 3 obus, les obus (n-3) (n-2) (n-1) sont encore en route vers la cible. La première direction de dépointage est en règle générale arbitraire. Dans un mode de réalisation où le signal émis par la fusée de proximité est un signal électromagnétique et où la polarisation est rectiligne et tourne avec l'obus, il est alors possible avec des dispositifs au sol d'analyse de la polarisation des signaux reçus d'obtenir une direction probable de l'obus par rapport à la cible. Dans ce cas le premier dépointage est fait dans une direction propre à diminuer la distance de passage.

La deuxième direction de dépointage est également arbitraire, sauf dans le cas d'analyse de la polarisation où l'on procède comme pour la première direction.

Selon le procédé de l'invention on tire profit des informations de distance de passage de la cible pour organiser un balayage de plus en plus fin autour de la cible. Cela signifie que la dimension angulaire maximale de la zone balayée est de plus en plus petite. De la sorte, la concentration d'obus autour de la cible est de plus en plus grande ce qui augmente la probabilité d'atteinte.

Dans un mode de réalisation du procédé selon l'invention, on utilise pour mesurer la distance de passage le décalage temporel entre le signal reçu directement de la fusée de proximité de l'obus et le même signal tel que réfléchi par la cible. Dans ce cas la distance $D_o$ est définie a posteriori, comme la distance à partir de laquelle le signal réfléchi par la cible est suffisamment fort pour être perçu de façon suffisamment stable pour être exploité par les moyens de recueil d'informations de la conduite de tir.

Selon un perfectionnement apporté à ce premier mode de réalisation, la distance $D_o$ est définie a priori et un commutateur placé dans l'obus permet de commuter le niveau de puissance émise par la fusée de proximité de façon à augmenter la puissance émise par la fusée de proximité au maximum de ce que peuvent tenir les circuits d'émission émettant à cette puissance pendant une durée de quelques millisecondes.

Cette façon de procéder permet d'utiliser les circuits existants des fusées de proximité avec une modification mineure par exemple au niveau de l'alimentation électrique de la fusée de proximité. Cette dernière comporte en général une pile et un système secondaire de régulation. Il suffit de commuter un élément de cette régulation pour obtenir une tension d'alimentation plus importante. On obtient alors une puissance d'émission plus importante en général assortie d'une légère dérive dans la fréquence d'émission. Les circuits dimensionnés pour une certaine puissance peuvent en général tenir une puissance plus grande pendant une durée plus petite.

Pour les modes de réalisation du procédé il pourra être utile de munir l'obus de moyens permettant à la fusée de proximité d'émettre une partie de son signal vers l'arrière. Les fusées de proximité sont habituellement prévues pour émettre leur signal dans le secteur avant de l'obus. Il en résulte que le corps de l'obus masque le signal dans la direction arrière qui est celle des moyens de recueil d'informations de la conduite de tir.

Dans un autre mode de réalisation la distance $D_o$ est également définie a priori, et l'obus commence à émettre, lorsque la distance est inférieure à $D_o$, un signal convenu représentant la valeur mesurée de la distance. Ce signal est alors émis vers l'arrière. Cette dernière façon de faire permet de simplifier la réalisation des moyens d'information et de calcul de la conduite de tir, car il n'est alors plus nécessaire que ces moyens soient capables de discriminer un signal faible - le signal réfléchi - arrivant en même temps ou quelques nanosecondes après un signal fort à une fréquence légèrement décalée par l'effet Doppler de la cible. Par contre dans ce cas l'obus comporte des moyens d'émission du signal et des moyens de déclenchement de l'émission lorsque la distance devient inférieure à $D_o$.

Dans tous les cas, le logiciel pilotant les moyens de calcul de la conduite de tir comporte un module permettant de corréler, l'écart de position du canon par rapport à la direction principale de tir au moment du tir de l'obus de rang p, et la distance de passage de ce même obus de rang p. Les données reçues du canon sont le rang de l'obus tiré, l'angle de dépointage, l'heure du tir.

A partir des moyens de recueil d'informations de la conduite de tir et d'informations internes au système comme la nature de la munition tirée le temps de parcours de la munition est estimé. L'heure de réception des signaux en provenance de l'obus à proximité et/ou de la cible, étant également connue il est possible de savoir que c'est bien le signal de l'obus de rang p que l'on reçoit.

Le contrôle ainsi opéré est destiné à détecter les obus dont le signal n'a pas été reçu. Ceci peut arriver si la distance est fixée a priori et que la distance de passage reste supérieure à $D_o$, ou en cas de dysfonctionnement ou de phénomène de masque.

Le signal transmis par l'obus peut être tout signal électromagnétique, optique, laser, infrarouge.

Un exemple particulier de réalisation sera maintenant décrit en référence aux dessins annexés dans lesquels :

- les figures 1 à 3 et 5 représentent des vues schématiques d'obus modifiés pour être utilisés dans une conduite de tir utilisant un procédé selon l'invention ;
- la figure 4 représente un dispositif de tir comportant des moyens de recueil d'informations sur la cible et de conduite de tir à même d'utiliser le procédé selon l'invention.

L'exemple particulier de réalisation qui va maintenant être décrit est relatif à un canon antiaérien plus particulièrement destiné à des cibles tels que des hélicoptères ou des drones volant à basse altitude à une distance inférieure à 5000 m. La conduite de tir est dotée de moyens d'informations radar.

Les canons pilotés sont des canons de petit calibre typiquement entre 20 et 45mm. L'invention est toutefois directement applicable également aux canons des tourelles antiaériennes de 100 mm souvent utilisées à bord des navires.

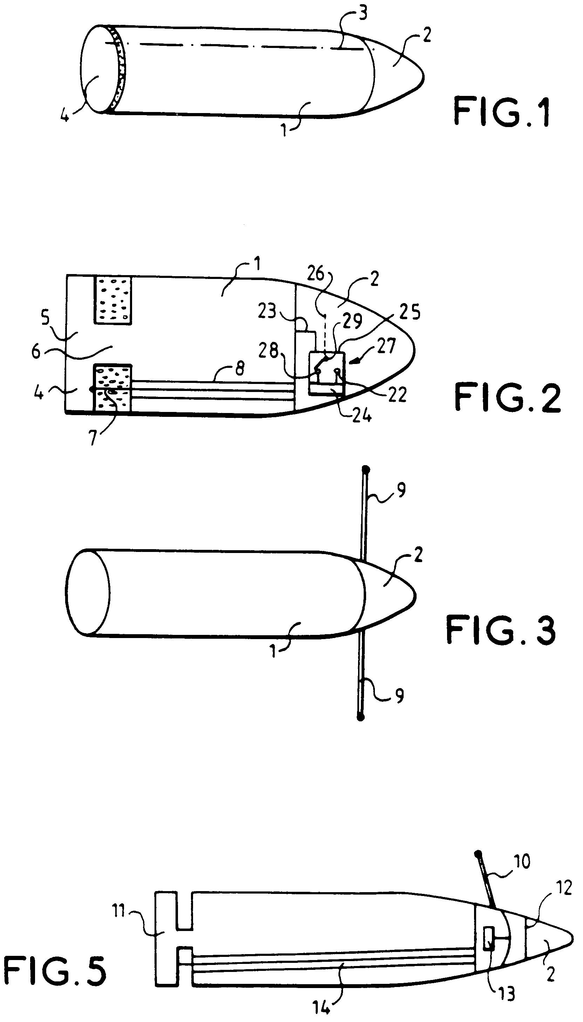

La figure 1 représente le schéma d'un obus 1 qui de façon connue est équipé d'une fusée de proximité 2. Une liaison interne 3 sous forme d'un câble coaxial permet d'alimenter une antenne de culot 4. La liaison interne 3 pourrait également être un guide d'onde ou en cas de signal optique une ou plusieurs fibres optiques.

La figure 2 représente une coupe du même obus, destinée à montrer schématiquement l'arrangement de l'antenne 4 au niveau du culot ainsi qu'un dispositif de commutation en lui-même connu. L'antenne 4 est constituée par un disque conducteur 5, relié à la masse de l'obus par une partie centrale 6. La partie périphérique entre le disque conducteur 5 et le reste de l'obus 1, comporte une matière isolante résistante à la chaleur et à la compression, par exemple un verre polyimide. L'âme 7 du coaxial 3 est reliée à l'antenne et la gaine 8 à la masse. La fusée de proximité 2 est alimentée sur une borne d'alimentation 23 par une alimentation électrique 27 équipée d'une pile 24 et d'une régulation secondaire 25. Un commutateur analogique ou numérique 29 permet de passer d'une première position 28 dite position régulée à une seconde position 22 dite position de puissance sur réception d'un signal en provenance de la fusée 2 par l'intermédiaire d'une liaison 26.

La solution présentée sur les figures 1 et 2 repose sur l'installation d'une antenne plate (type annulaire par exemple) à l'arrière de l'obus. Cette installation a le mérite de permettre de monter en fréquence et donc de pouvoir disposer de gains d'antenne, vers la cible et la conduite de tir, élevés (3 dB). Elle présente par contre l'inconvénient de nécessiter une liaison hyperfréquence traversant la charge de l'obus dans toute sa longueur.

La solution présentée sur la figure 3 repose sur le déploiement de deux filaments 9 à l'extérieur de la fusée de proximité de manière à réaliser une antenne dipôle perpendiculaire à l'axe de l'obus. Cette fois-ci, la modification de l'obus n'est effectuée qu'au niveau de la fusée de proximité. Le déploiement d'une antenne filaire à la sortie du canon ou d'ailettes est connu en soi. Dans le cas de l'invention, les fils d'antenne sont maintenus par collage faible, et se déploient sous l'action de la force centrifuge lors du tir, le canon étant rayé.

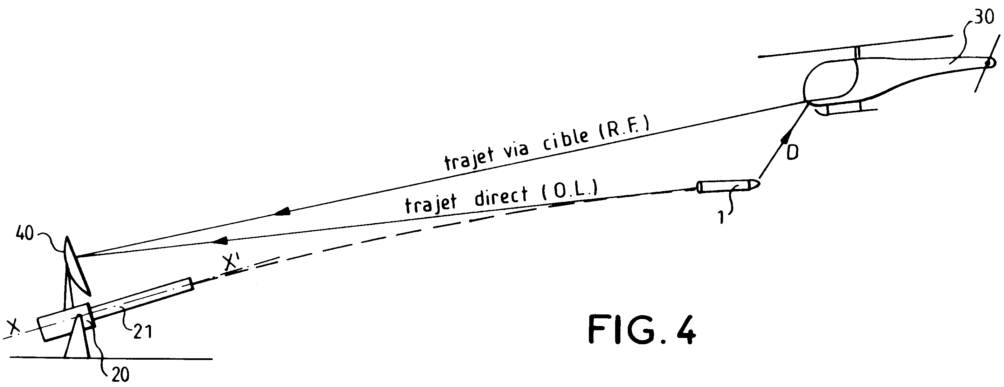

L'utilisation et le fonctionnement de l'obus associé à la conduite de tir est illustré à l'aide de la figure 4 qui représente une arme 20, munie d'un canon 21 d'axe XX'. On a représenté un obus 1 arrivant à proximité d'une cible 30. Les moyens d'informations de la conduite de tir ont été représentés par une antenne radar 40. Les moyens de calcul, d'orientation et de déplacement du canon, connus en eux-mêmes n'ont pas été représentés.

La fusée de proximité de l'obus mesure de façon connue la distance à la cible et ne commande la mise à feu de la charge de l'obus que pour une distance inférieure à la borne préalablement fixée.

Le capteur électromagnétique effectuant cette opération est donc un distance-mètre doté d'une résolution en distance de l'ordre de 1 ou 2 mètres. Le signal émis par ce capteur en direction de la cible, peut, lorsque celle-ci est détectée, continuer à être émis durant quelques millisecondes à un niveau le plus élevé possible. La conduite de tir recevra donc par un trajet direct, (O.L.), un signal fort qu'elle pourra utiliser comme référence ou oscillateur local (O.L.) et par un trajet via la cible 30 un signal faible retardé d'environ la miss-distance qu'elle considérera comme un signal réfléchi (R.F.).

Le code électromagnétique émis par l'obus pour son propre besoin d'évaluation de la distance cible reste parfaitement adapté pour la conduite de tir. En effet, la corrélation entre les deux signaux reçus (O.L. et R.F.) retardés d'un même temps de parcours conduira à l'extraction de la miss-distance par la conduite de tir de façon rigoureusement analogue à ce qui est effectué dans la fusée de proximité de l'obus.

Il n'y a pas de complexification majeure de la fusée de proximité de l'obus, si ce n'est l'installation d'une antenne émettant vers l'arrière.

Il est bien sûr supposé que la fusée émet un code permettant une vraie mesure distance, comme le fait un radar. Ceci suppose une modulation de l'émission hyperfréquence selon des procédés connus comme, codage de phase, modulation linéaire de fréquence.

L'évaluation des paramètres importants pour la réalisation sont données ci-après pour une cible située à 3 km du canon.

La poursuite globale de la cible par la conduite de tir fait que celle-ci ne présente qu'une vitesse latérale instantanée d'au plus 5 m/s.

La cadence de tir est de 100 coups par minute environ.

La puissance émise (Pe) par l'obus est de 100 mW.

La surface (Se) de réflexion de l'onde sur la cible est évaluée à 0,1 m$^2$ (0,3 m x 0,3 m), et le rerayonnement de cette surface à 10% en direction de la conduite de tir.

La surface (Sr) de l'antenne 40 de la conduite de tir est de l'ordre de 1 m$^2$.

Dès lors, le niveau d'O.L. reçu par la conduite de tir à 3 km (Dmax) dans le cas où le gain vers l'arrière de l'obus est de 0dB est de :

$$P_{O.L.} = Pe. \ Sr/(4. \ pi. \ Dmax^2) = 1 \ nW$$

La puissance reçue par le trajet via la cible, si la miss-distance (D) est de 10 mètres, est de :

$$P_{R.F.} = Pe/(4.pi. \ D^2).10\%. \ Sc. \ (4.pi. \ Sc/\lambda^2)/(4.pi. \ Dmax^2)$$

Avec $\lambda$ désignant la longueur d'onde, nous prendrons ici $\lambda$ = 0,1 mètre, soit une fréquence de fonctionnement de 3 GHz.

Dès lors, $P_{R.F.}$ = 1 pW.

Bien que faibles, ces niveaux restent exploitables car très au-dessus du bruit thermique. De plus, le nanowatt d'O.L. permet de reconnaître le picowatt de R.F., et donc d'établir la miss-distance.

Enfin, le déplacement de la cible reste faible d'un coup au suivant (3 mètres maximum), ce qui permet une bonne exploitation des données acquises lors du balayage du pointage.

Le dialogue précédemment décrit ne permet d'informer la conduite de tir que de la miss-distance de chaque obus.

Une variante intéressante de l'invention peut consister dans le fait que les deux solutions d'antennes présentées aux figures 1, 2 et 3 possèdent une polarisation rectiligne perpendiculaire à l'axe de l'obus. De ce fait, dans l'hypothèse d'un tir à partir d'un canon rayé, l'obus est en rotation, et si l'on crée des trous de rayonnement pour certaines directions de la cible, il est possible de communiquer à la conduite de tir par simple analyse de la polarisation reçue, les directions probables de la cible. Le recoupement de ces informations pour un petit nombre d'obus affine donc la localisation de la cible, puisque dans ce cas on a non seulement l'information de miss-distance mais de plus une information sur la direction d'un plan axial de référence dans l'obus.

Selon une variante de réalisation de l'obus représenté figure 5, la miss-distance est transmise vers la conduite de tir directement sous forme d'un message codé, de façon analogue a ce qui est pratiqué en télémesure.

Dans ce cas l'information de distance en provenance de la fusée de proximité 2 est convertie, en un message télémesure et émise sur une autre fréquence par un émetteur 13.

Sur la figure 5 on a représenté deux solutions alternatives, un obus réel n'ayant que l'une ou l'autre.

Dans une première solution l'antenne d'émission est une antenne annulaire 11 située à l'arrière de l'obus et une liaison interne 14 relie l'émetteur 13 à l'antenne 11 à travers la charge de l'obus 1.

Dans une seconde solution l'antenne d'émission est une antenne fouet 10 déployable par la rotation de l'obus. Cette antenne 10 est placée en arrière d'une antenne 12 de la fusée de proximité.

**Revendications**

1. Procédé de correction périodique de pointage en direction d'une cible (30) d'un canon (20) tirant des obus (1) comportant un émetteur (2) d'un signal susceptible d'être réfléchi par la cible (30) de façon à ce que la distance obus-cible puisse être mesurée, certains obus étant à un instant donné au cours du tir en route vers la cible (30) et un obus se trouvant périodiquement à proximité de la cible (30) à une distance d'elle inférieure à $D_o$, la correction du pointage étant effectuée par une conduite de tir comportant des moyens de recueil d'information (40) sur les données cinématiques de la cible (30) et des moyens de calcul intégrant de façon périodique la distance de passage de l'obus se trouvant à proximité de la cible (30), procédé caractérisé en ce que on augmente l'amplitude du signal émis lorsque la distance obus-cible devient inférieure à la valeur $D_o$.

2 Procédé selon la revendication 1 caractérisé en ce que on utilise les informations successives de distance de passage pour organiser un balayage de la direction de pointage du canon (20) à l'intérieur d'un secteur angulaire où se trouve la cible (30).

3. Procédé selon la revendication 2, caractérisé en ce que pour organiser le balayage
   - 1°) après réception de la première distance de passage on dépointe le canon (20) par rapport à la direction principale dans une première direction d'un angle de valeur calculée en fonction des données cinématiques de la cible ;
   - 2°) après réception de la deuxième distance de passage, on dépointe le canon dans la même direction d'un angle de valeur calculée en fonction des données cinématiques de la cible (30) et de la valeur de l'accroissement algébrique de distance entre la première et la seconde information de distance de passage et dans une seconde direction d'un angle de valeur calculée en fonction des données cinématiques de la cible ;
   - 3°) après réception de la troisième distance de passage on dépointe le canon dans la première et dans la seconde direction d'un angle de dépointage calculé en fonction de la valeur de l'accroissement algébrique de distance entre la première et la seconde information de distance de passage et de l'accroissement algébrique de distance entre la troisième et la seconde information de distance ;
   - 4°) on recommence les étapes 1 à 3 pour d'autres directions de pointage de façon à organiser un balayage de plus en plus fin autour de la cible.

4. Procédé selon la revendication 1 ou 2, caractérisé en ce que l'information de distance de passage est obtenue par mesure de l'écart de temps entre la réception du signal émis par l'émetteur (2) situé dans l'obus (1) et la réception de ce même signal réfléchi par la cible.

5. Procédé selon la revendication 3, caractérisé en ce que l'émetteur est un émetteur faisant partie d'une fusée de proximité (2) de l'obus.

6. Procédé selon l'une des revendications 1 à 5, caractérisé en ce que les moyens de recueil d'informations de la conduite de tir sont des moyens radars et que le signal de l'émetteur de l'obus est un signal radar.

7. Procédé selon la revendication 6, dans lequel le signal émis par l'émetteur à une polarisation rectiligne et tourne avec l'obus et en ce que la direction du pointage tient compte de la polarisation des signaux émis par la cible et réfléchis par la cible.

**8.** Procédé selon l'une des revendications 1 à 7, caractérisé en ce que le balayage autour de la cible est un balayage dont les différents points sont sur une spirale.

**9.** Obus (1) comportant une partie avant et un culot arrière, une fusée de proximité (2) capable de mesurer la distance de l'obus (1) à une cible (30) l'obus comportant des moyens (3, 4, 9) d'émission dans un secteur arrière de l'obus (1) d'un signal permettant l'acquisition par une conduite de tir de la distance obus cible caractérisé en ce que les moyens d'émission du signal d'acquisition de distance comporte une antenne reliée à un émetteur dont la puissance d'émission peut être augmentée par changement de la position d'un commutateur (29) commandé par un signal en provenance de la fusée de proximité (2).

**10.** Obus selon la revendication 9, dans lequel les moyens d'émission du signal d'acquisition de distance obus-cible comportent une antenne (4) située au niveau du culot de l'obus, l'antenne 4 étant alimentée par un signal en provenance de la fusée de proximité (2) au moyen d'une liaison (3).

**11.** Obus selon la revendication 10, dans lequel les moyens d'émission du signal d'acquisition de distance obus-cible comportent une antenne filaire (10) maintenue par collage faible à une partie extérieure de l'obus.

**12.** Obus selon la revendication 10 dans lequel l'antenne (4) est une antenne dipôle (9).

**13.** Obus selon la revendication 10 dans lequel l'antenne est constituée par un disque conducteur (5) dont la partie périphérique comporte une matière isolante.

**14.** Obus selon la revendication 10 caractérisé en ce que la matière isolante est un verre polyimide.

**FIG.1**

**FIG.2**

**FIG.3**

**FIG.5**

trajet via cible (R.F.)

trajet direct (O.L.)

**FIG. 4**

30

D

1

X'

40

21

20

X

EP 0 624 805 A1

Office europécn
des brevets

**RAPPORT DE RECHERCHE EUROPEENNE**

Numero de la demande

EP 94 40 1000

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | US-A-3 848 509 (CORN)<br>* abrégé *<br>* colonne 2, ligne 63 - colonne 7, ligne 50; figures 1-5 *<br>--- | 1-3 | G01S13/50<br>F41G3/14 |
| A | US-A-3 029 426 (R. O. ROBINSON JR)<br>* colonne 2, ligne 30 - colonne 4, ligne 57; figures 1-5 *<br>--- | 9 | |
| A | EP-A-0 116 183 (H S A BV)<br>* abrégé *<br>* page 2, ligne 32 - page 22, ligne 19; figures 1-5 *<br>--- | 1-3 | |
| A | US-A-4 015 258 (SMITH ET AL.)<br>* abrégé *<br>* colonne 2, ligne 8 - colonne 4, ligne 13; figures 1-4 *<br>--- | 1-3 | |
| A | US-A-4 449 041 (GIRARD)<br>* abrégé *<br>* colonne 2, ligne 19 - colonne 4, ligne 28; figures 1,2 *<br>--- | 1-3 | **DOMAINES TECHNIQUES RECHERCHES (Int.Cl.5)**<br><br>G01S<br>F41G |
| A | EP-A-0 372 435 (C S I R)<br>* abrégé *<br>* page 3, ligne 31 - page 5, ligne 31; figures 1-10 *<br>--- | 9 | |
| A | US-A-3 353 179 (V. F. CARTWRIGHT)<br>* abrégé *<br>* colonne 2, ligne 48 - colonne 6, ligne 18; figures 1-5 *<br>--- | 9 | |
| A | GB-A-1 571 379 (M E S LTD)<br>* page 2, colonne de gauche, ligne 65 - page 6, colonne de gauche, ligne 58; figures 1-7 *<br>----- | 9 | |

Le présent rapport a été établi pour toutes les revendications

| Lieu de la recherche | Date d'achèvement de la recherche | Examinateur |
|---|---|---|
| LA HAYE | 26 Juillet 1994 | Blondel, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)